# EUROPEAN PATENT SPECIFICATION

(11) **EP 2 591 614 B1**
(45) Date of publication and mention of the grant of the patent: **14.05.2014**
(21) Application number: 11726087.7
(22) Date of filing: 31.05.2011
(51) Int. Cl.: H04R 5/04, H04R 29/00, H04S 7/00

(54) **A METHOD AND AN APPARATUS FOR A USER TO SELECT ONE OF A MULTIPLE OF AUDIO TRACKS**
VERFAHREN UND VORRICHTUNG FÜR EINEN BENUTZER ZUR AUSWAHL EINER TONSPUR AUS MEHREREN TONSPUREN
PROCÉDÉ ET APPAREIL POUR PERMETTRE À UN UTILISATEUR DE SÉLECTIONNER L'UNE DE MULTIPLES PISTES AUDIO

(30) Priority: 06.07.2010 DK 201000600
(43) Date of publication of application: 15.05.2013
(73) Proprietor: BANG & OLUFSEN A/S, 7600 Struer (DK)
(72) Inventor: PEDERSEN, Jan Abildgaard, DK-7500 Holstebro (DK)
(74) Representative: Inspicos A/S
(86) International application number: PCT/EP2011/058973
(87) International publication number: WO 2012/004057

(56) References cited:
- WO-A1-2004/023774
- JP-A- 7 153 244
- US-A1- 2006 251 263

## Description

The present invention relates to a user interface allowing a user to select one of a multiple of audio tracks where the user is simultaneously presented to two or more of the audio tracks from different directions. The user is then allowed to enter his/her selection.

Technology of this type may be seen in WO2006/251263, WO2004/023774 and JP 7 153244.

A phenomenon experienced during e.g. cocktail parties is that of angularly or mentally selecting or filtering the sound from one direction when sounds are impinging from multiple directions. The person is very well aware of the sounds from the other directions but is able to put an emphasis on sound from a given direction and give prevalence to this sound.

This effect may be used for allowing the user to actually listen to one audio source or track but still be presented to other audio sources or tracks from different directions. If an interesting source/track is heard, the user may direct his attention to this direction. However, as the preferred direction is often that immediately in front of the user, the user may, upon entering an instruction, have the new, interesting audio track/source provided from a direction in front of the user. Then, other tracks/sources may be presented to the user.

The present invention is defined in a method according to claim 1 and a corresponding system according to claim 5. Further aspects of the invention are defined in dependent claims 2-4, 6 and 7.

A first aspect relates to a method for a user to select one of multiple audio tracks, the method comprising:
1. simultaneously providing:
   - a first of the audio tracks from a first predetermined direction and with a first intensity and
   - a second of the audio tracks from a second predetermined direction and with a second intensity, the first direction being different from the second direction, and the first intensity exceeding the second intensity,
2. during or subsequent to step 1., the user provides a predetermined input,
3. subsequent to step 2., simultaneously providing:
   - the second audio track from the first predetermined direction and with a third intensity exceeding the second intensity and
   - a third of the audio tracks from the second predetermined direction and with a fourth intensity, the third intensity exceeding the fourth intensity.

In the present context, an audio track may be a song, melody, concert, podcast, file, radio channel, audio source or the like, whether streamed (as with radio/TV channels) of fully available (as a complete file available to a player).

The multiple tracks may be tracks from the same source, such as the same storage, such as a CD or the like. Alternatively, the tracks may be from different sources and/or have different parameters, such as being of/from different artists, different decades, different genres or other of the parameters usually used for tagging audio tracks.

It is noted that a track may be a compilation or group of tracks of a given order, such as a playlist, the tracks of a CD, a concert, an audio folder or the like. Thus, if no instruction is given, the first track may be a series of e.g. songs played in a given order. The same naturally is the case for any of the other tracks described.

During step 1., the first and second audio tracks are provided simultaneously from two different directions and at different intensities. In this respect, the intensity of an audio track is the volume with which it is provided, usually determined in dB.

Naturally, audio provided from a given direction may be provided by a speaker provided in that direction. However, multiple speakers may be provided, the signals for which may be filtered and amplified to have the audio sound as being provided from a predetermined direction even if no speaker is actually provided along that direction. Also, a plurality of speakers may be brought to output multiple audio tracks while having these tracks sound as if they are coming from different directions.

Thus, during step 1., the user hears both the first and the second tracks.

Preferably, the first and second directions are spaced from each other by an angle sufficiently large for a user to actually separate audio coming from the two directions. Trained listeners are actually able to discern down to an angle of 2 degrees or less, but preferably, the first and second directions are separated by at least an angle of 10 degrees, such as at least 20 degrees, such as at least 45 degrees. Most often, the different directions are positioned in a horizontal plane, but it is quite possible also to discern directions out of the horizontal plane. A listener is able to determine directions even behind the listener.

The directions may be fixed and determined in relation to, such as from, the user, such as a preferred direction of a user, or in relation to surroundings in which the user is positioned, such as a compartment of a car or a room.

When multiple speakers are available, the direction from which a track seems to be provided may be varied, so that if the directions are fixed in relation to the direction of the users head (first direction directly in front of the users head/nose), rotation of the head will be a rotation of the other directions, which then is a change in the apparent direction from which the audio tracks are provided.

When the user provides the input, which will be described further below, the user selects that the second track is to be provided from the first direction and at the third, higher, intensity, and/or that a new, i.e. the third audio track, is to be provided from the second direction.

Naturally, the third intensity may be identical to or close to the first intensity and/or the fourth intensity could be identical to or close to the second intensity.

Thus, the user is provided with the first track at the higher intensity, and thus can be seen as the primary audio track, while listening to the second track at a lower intensity. If the instruction is given, the second track is provided from the first direction at a higher intensity and is now the primary audio track, where after a third track is provided from the second direction at a lower intensity.

In this respect, the intensity of the track provided from the first direction exceeds that of the track provided from the second direction. This "exceeding" may be an intensity being at least 3dB higher, such as at least 6dB higher than the intensity of the track provided from the second and (see further below) third directions.

The simultaneous providing of multiple audio tracks of steps 1. or 3. may be taking place always, so that the user is always provided with different tracks from the first and second directions. Alternatively, step 1. may be preceded by a step of only providing the first audio track from the first direction without providing audio tracks from other directions, and/or step 2. may be succeeded by a step of only providing the second audio track from the first direction and no audio track from the second direction.

Thus, the simultaneous providing of multiple audio tracks may be performed intermittently or at predetermined points in time, such as at the beginning of a new track/song/melody, or simply when instructed to do so. Thus, when a new track/song/melody is provided from the first direction, either as a result of an instruction or as a result of the former track/song/melody simply finishing and a new track/song/melody beginning, another track may be provided from the second direction for a predetermined period of time in order to allow the user to deselect the new track/song/melody provided from the first direction. Is no input entered, the track provided from the second direction may be silenced after a predetermined period of time and only be re-played, if an instruction to that effect is received.

The selection of the second audio track may be made in any manner. The user may pre-set the system for selecting tracks/song/melody of interest, or the system may select tracks/song/melody often used. Alternatively, the second track/song/melody may be determined using a selection routine, such as the so-called More Of The Same routine which selects, from a seed track, which may be the first track actually played, other tracks with similar parameters (beats per minute, artist, genre, energy or the like). MOTS routines are a separate but widely used and researched technical area well known to the skilled person. Thus, if no input has been entered through a majority of a track/song/melody, so that it can be assumed that the user likes the track/song/melody, another track/song/melody may be provided at the end of the this track/song/melody to interest the user in other tracks/song/melody of e.g. the same type.

It may be desired that step 2. takes place during step 1., i.e. while the tracks are provided simultaneously. Also, it may be desired that step 3. is performed immediately after, i.e. within 10 seconds, such as within 5 seconds of, the input.

In one embodiment, the first direction is a direction in front of the user and wherein the second direction is to a side of the user. Usually, people have a preference of facing the source or direction of the sound listened to. Then, the second direction may be selected e.g. 45 degrees or more, such as 60 degrees or more, preferably up to 90 degrees from the centre of the person toward the side of the person.

Naturally, more directions and more audio tracks may be provided. Depending on the training of the person, quite a number of different sources and directions may be told apart (discerned) from each other. Thus, different audio sources may be provided for the user to choose between.

However, in order to make the selection process simple and, not the least, reversible, it is preferred that:
- step 1. further comprises simultaneously providing a fourth of the audio tracks from a third predetermined direction and with a fifth intensity, the third direction being different from the second direction and the first direction, and the first intensity exceeding the fifth intensity,
- step 3. further comprises simultaneously providing the first audio track from the third direction and at a sixth intensity, the third intensity exceeding the sixth intensity.

Thus, a flow of the audio tracks is seen. Firstly, it is provided with a lower intensity and then, when selected, from the first direction and with a higher intensity. Then, when another track is selected, the initial track is provided from the third direction and again with a lower intensity. In this manner, the user may re-select the initial track by entering a predetermined instruction which may make this initial track again be provided from the first direction and with a higher intensity.

Preferably, this flow is one where the first, second and third directions are provided at least substantially within a plane, the first direction being in front of the person and the second and third directions being on either side of the first direction.

Naturally, several such flows may be provided, such as providing also a fourth and fifth directions which are also provided in a plane together with the first direction. This plane being at an angle to the above-mentioned plane. Thus, audio may be provided from also the fourth and/or fifth directions and be selected by the user, whereby the audio from the fourth or fifth direction is provided from the first direction at the higher intensity. Thus, the user may navigate back and forth in multiple such planes if desired.

As to the input of step 2., a wide variety of input possibilities are available and known today. An input may be a click on a mouse, a clap, a sound, a rotation of a wheel, an activation of a button, a tap on a key of a keyboard or the like.

In one embodiment, step 2. comprises the user moving a predetermined element. This movement could be a movement of the predetermined element from a first position to a second position, the first position being closer to a position along the second direction than the second position. Alternatively, the movement could be a movement of the predetermined element from a first angular direction to a second angular direction, where the first angular direction is closer to the second direction than the second angular direction.

In a simple embodiment, the first, second and optionally third directions are provided in a horizontal plane, where the movement then may be a movement or a change of direction in the horizontal plane from left to right or vice versa.

In general, the movement may be that of an element, such as a remote control, a knob, an engageable arm (as those used in cars for turn signals, windscreen wipers and the like).

However, situations exist where the focus of the user must be elsewhere and/or where usual computer input means are not that available.

In a particular situation, the user is the driver or a passenger of a vehicle, where the user's hands may be required at the steering wheel or the like. Thus, other types of inputs may be desired.

In such situations, it may be desired that the moving step comprises the user moving, as the predetermined element, his/her head, and/or that the moving step comprises the user moving, as the predetermined element, an element attached to or his/her head, such as a pair of glasses, a headset worn on or at an ear, a measuring instrument, such as a gyro, worn on the head of the person.

The movement of e.g. a Bluetooth® headset or a magnet worn on the head of the person may be determined by providing a measuring system within in the vehicle and/or in the vicinity of the person.

Also, the movement of the head and/or eye(s) or the element attached thereto may be determined using a camera, an iris scanner or the like which e.g. provides a number of images from which movements may be determined and used as the input. The movement or angle of the nose, the eyes or the like may be used for determining the input.

Then, a simple movement or change in angle, position or direction of the head/element or the like may be used for causing the change in audio track.

However, a more complex input generation may be desired where not only the position/direction/movement but also other parameters related thereto are determined and used. In one situation, the velocity of the movement is determined and used. In one situation, the multiple tracks are ordered in a predetermined manner. This ordering may be alphabetically in track name, artist name or the like, where all available tracks are ordered, or such order may be provided within a larger grouping, such as artist, genre, decade, producer or the like. Many different orders are known, and any order may be used.

Then, a slow movement may select the next track in the order so that when the second track is moved to the first direction, the next track in the order is selected for the third track.

A faster movement, however, may select as the third track not the next track in the order but that 2, 3,4, 5, 6, 7, 8, 9, 10 tracks or more further into the order.

Thus, a faster movement "scrolls" faster through the tracks.

Naturally, the same movements "in the other direction" may provide the same scrolling through the tracks in the other direction.

Also, other inputs and/or movements may be used for other types of instructions. A movement not toward any of the predetermined directions, such as in a direction or out of a plane in which the predetermined directions are provided, may be used for selecting or ordering tracks in another manner.

For example, if the predetermined directions are in a horizontal plane, a vertical movement, such as a nod, may change an overall genre of tracks provided, so that subsequent horizontal movements may now select between tracks of another genre and/or ordered in another manner than those provided before. Nodding, thus, may change between artists, genres, types, or the like, where sideways movements may change between tracks of the presently selected genre/artist etc.

Another aspect relates to a system for enabling a user to select one of multiple audio tracks, the system comprising a plurality of speakers, an input means, and a controller comprising or being adapted to access the plurality of tracks, the controller being adapted to control the speakers to:
1. simultaneously provide:
   - a first of the audio tracks from a first predetermined direction and with a first intensity and
   - a second of the audio tracks from a second predetermined direction and with a second intensity, the first direction being different from the second direction, and the first intensity exceeding the second intensity,
2. upon an operation of the input means, simultaneously:
   - provide the second audio track from the first predetermined direction and with a third intensity exceeding the second intensity and
   - provide a third of the audio tracks from the second predetermined direction and with a fourth intensity, the third intensity exceeding the fourth intensity.

In this context, any number, exceeding one, of speakers may be used. Many speakers may be desired to obtain the desired sound and sound intensity, but even two speakers suffice for providing different tracks from different directions. Many speakers may make is easier to obtain a desired sound in environments where the positioning of speakers is not completely free, such as in cabins of cars or in rooms of a house.

It is noted that the speakers need not be provided along the directions. A signal relating to a track may be provided to two speakers in a given proportion, whereby the track will sound as if provided from a position between the speakers.

The controller has access to or has stored therein the tracks. As is described above, tracks may be available from internal or external storage or sources, such as streaming sources via the Internet, via airborne signals or the like. A track may be a tune/melody, a radio channel, a collection of tunes/melodies, a playlist, or any other type of audio. Naturally, the actual track or source may also comprise video which may be provided, at least for the track provided from the first direction, on a display.

When the controller is adapted to simultaneously provide more than one track, it is adapted to receive or read, for example, more than one track and feed to the speakers signals relating to these tracks, so that the sound output by the speakers relates to the two tracks simultaneously. It is noted that the same speaker may receive a signal being a mixture of signals relating to more than one track. However, normally, different speakers will receive different signals, such as signals with different percentages or proportions of the signals relating to the simultaneously provided tracks.

Naturally, the controlling means may comprise filtering means, amplifying means, mixing means and the like. The controlling means may comprise a processor, such as a DSP, a FPGA, an ASIC or the like for determining the signals to be fed to the speakers, or at least which processes are to be performed on the signals relating to the tracks before these are fed to the speakers. This processing may be the mixing of the signals in different proportions and potentially filtering thereof, as well as amplifying, if desired. A separate amplifying step may also be provided either for multiple speakers or for each speaker individually.

The determination of the angles may be made by or controlled by positions of the speakers and the user or a listening position, whereby the proportions of the signals relating the simultaneously provided tracks may be determined for each speaker.

The engagement of the input means may, as is described above, be any engagement of any type of input means. Thus, the input means may be any type of input means used in relation to computers, such as a mouse, a joy stick, a keyboard, a touch pad or touch screen. In addition, buttons, levers or the like may be used. A particularly interesting type of input means is a tracking device adapted to determine or track a movement, position and/or direction of an element either forming part of a user or engaging or fastened to the user. This will be described in more detail further below.

As mentioned above, it may be desired that the controller engages step 2. only if the engagement of the input means takes place during step 1. Also, it may be desired that the controller initates step 2. as soon as possible after the determination of the engagement of the input means.

In step 2., again two tracks are provided simultaneously. It may be preferred that the third intensity is more or less identical to the first intensity and that the fourth intensity is more or less identical to the second intensity.

In one embodiment, the first direction is a direction in front of the user and wherein the second direction is to a side of the user.

In that or another embodiment, the controller is adapted to control the speakers so that:
- step 1. further comprises simultaneously providing a fourth of the audio tracks from a third predetermined direction and with a fifth intensity, the third direction being different from the second direction and the first direction, and the first intensity exceeding the fifth intensity,
- step 2. further comprises simultaneously providing the first audio track from the third direction and at a sixth intensity, the third intensity exceeding the sixth intensity.

Thus, for example, the third direction may be to one side of the first direction, and the second direction to another side, so that it is easy for the user to discern tracks provided from the three directions from each other.

In one embodiment, as is described above, the input means are adapted to determine movement of a predetermined element, which may be a body part of a user or an element attached to, being engaged by or engaging that body part. Alternatively, the input means may be a simple button, lever or the like

In that embodiment, preferably the input means are adapted to determine whether the predetermined element is moved from a first position to a second position, the first position being closer to a position along the second direction than the second position. This movement preferably is from a position closer to the second direction to a position closer to the first direction, which is a movement mentally or figuratively from the second direction to or toward the first direction so as to "move" the track from being provided from the second direction to being provided from the first direction.

In another embodiment, the same may be obtained when the input means are adapted to determine whether the predetermined element is moved from a first angular direction to a second angular direction, where the first angular direction is closer to the second direction than the second angular direction.

Again, this input means may be a lever, for example, or an element engaged by, engaging or fixed to a body part of the user, such as a remote control held by the user or an element fastened to the hand, arm or head of the user.

Preferably, the predetermined element of the input means is a user's head or is an element adapted to be attached to or a person's head.

Thus, the predetermined element may be the head or a part thereof, such as the nose or the eyes. The movement, direction or position of the nose and the eyes is easily determined using e.g. a camera forming part of the input means and being positioned so as to view the user. The user may be the driver or a passenger of a car, for example.

In another embodiment, the input means may comprise an element attached to or engaging the head of the user, such as a pair of glasses, a headset or other element which a user may wear on his head. The input means may then comprise means for determining a position/direction and/or movement thereof. Again, a camera may be used. Alternatively, a sensor, such as a gyro mounted on the head of the person, such as as a part of the headset/glasses, may be used for outputting movement/position/direction data which may be received by the controller.

In yet another embodiment, the user may wear on his head an element, the position/movement/direction of which may be determined by a sensor provided in the vicinity, or vice versa. This element may be a magnet, and the sensor a hall sensor, for example.

As mentioned above, the controller may use not only the position/movement/direction of the element or input means but also a velocity thereof. As is known from e.g. Android® telephones, a faster scrolling movement will scroll further in a list of e.g. tracks than a slower one. Thus, the controller may determine and use the velocity of the scrolling or movement to select the next track to be provided. This is especially relevant when these tracks are provided in an order or sequence. Naturally, this sequence or order may be determined in any manner, such as alphabetically.

Also, other movements/positions/directions may be determined and interpreted as instructions for other actions than the altering of tracks, such as an altering of which tracks are provided or selected from. In one embodiment, the tracks may be divided into groups, such as genre, artist, composer, date/year/decade of production/issue or the like. A predetermined movement/position/direction may then be an instruction for changing the selection of tracks to another such group.

In one situation, movements/positions/directions in a horizontal plane may be seen as instructions relating to the changing of tracks, where movements/directions/positions in a more vertical plane or direction can be taken as instructions to change the group, for example.

In the following, preferred embodiments of the invention will be described with reference to the drawing, wherein:
- figure 1 illustrates a simple embodiment according to the invention,
- figure 2 illustrates another embodiment using a head tracker,
- figure 3 illustrates main elements of the system 18 and
- figure 4 illustrates navigation or movement within two perpendicular planes.

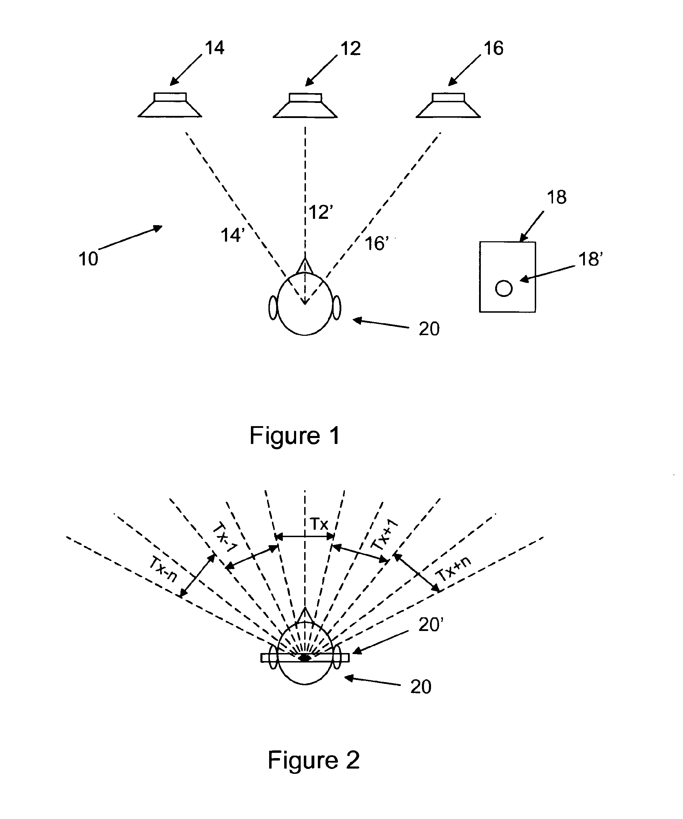

In figure 1, a set-up 10 comprises 3 speakers 12, 14 and 16 provided in front of a user 20. The speaker 12 is provided directly in front of the user along a direction 12', the speaker 14 is provided in front of and to the left of the user 20 along a direction 14', and the speaker 16 is provided in front of and to the right of the user 20 along a direction 16'.

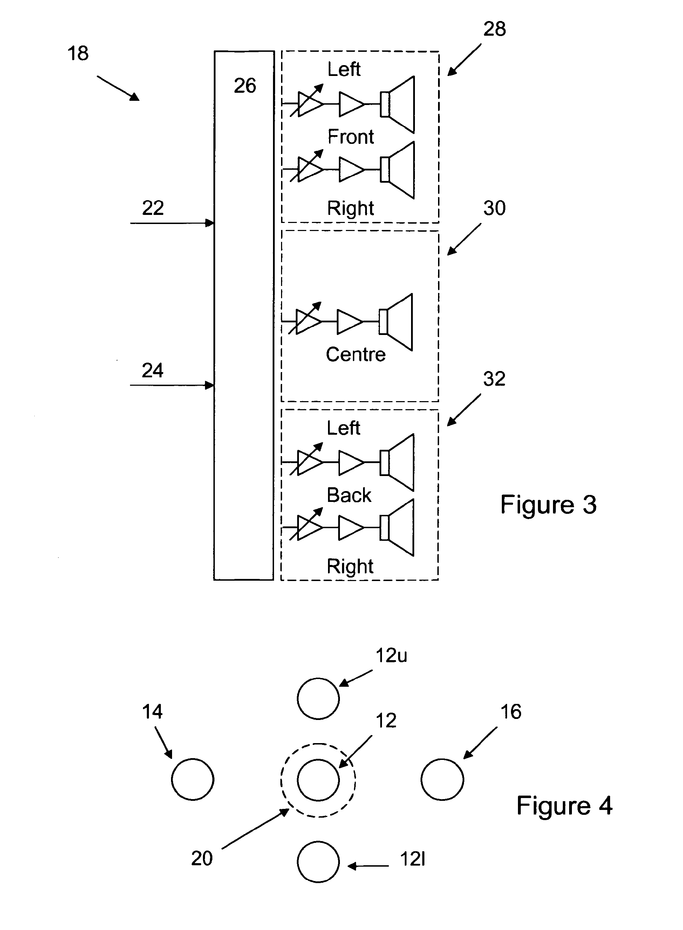

Illustrated is also a system 18 having stored therein or having access to a number of audio tracks. This system 18 may have an internal storage, such as a hard disc, floppy drives, disc drives, flash, tape, RAM, ROM, PROM, EPROM, EEPROM, memory cards, USB memory devices, external hard drives, or the like, on which audio tracks may be stored together with any desired, if any, meta data. The system 18 also has the desired processing, filtering and amplifying capabilities usual in stereo or audio equipment for providing the individual signals for the speakers 12, 14 and 16. Often, more than 3 speakers are present. It may be desired to be able to provide any order of playback, such as 3-, 4-, 5.1-, 6-, or 7.1- channel audio as is known in the art. This selection of playback order as well as any amplification, filtering and delay for each speaker may be controlled using e.g. a DSP of the system 18 (see figure 3).

In addition to the internally stored tracks, the system 18 may also have access to other tracks, such as via networking capabilities (wired, wireless, WLAN, Bluetooth®, optical fibres, LAN or the like). Also, the system 18 may comprise antennas and the like for receiving one or more radio/TV channels, digital or analogue.

The system 18 may comprise a display for providing also received or stored video data, such as video related to at least the sound provided along the direction 12'.

In operation, a first audio track is provided to the user from the direction 12' and a second audio track is provided to the user from the direction 14'. The first audio track is provided with a higher intensity and thus is the primary sound/audio source for the user, but the second audio track is provided with an intensity required for the user to discern it and be able to determine whether he/she would rather listen to that track. Now, the user may see the system as a spatial navigation system in which the user is in the middle between three zones of sound.

The user 20 enters an instruction, such as by pushing a button 18' of the system, whereby the first audio track is now provided from the direction 16' at a lower intensity, the second audio track is provided from the direction 12', and another, third, audio track is provided from the direction 14' so as to suggest the user to listen to that track instead. Again, the sound/audio from the direction 12' is the strongest and that from the directions 14' and 16' are lower in intensity.

Now, the user may keep listening to the second track from the direction 12', or he may select the third track from the direction 14', or he/she may re-select the first track now provided from the direction 16'.

In this manner, the user may listen to a main track (direction 12') while keeping updated on other tracks which may then be selected if desired. The user may listen to music from the direction 12' while listening for when the news are provided from one of the other directions. When this happens, this track may then be selected and brought to the primary direction 12' and also be provided at a higher intensity.

The user may use this method and system for scrolling through a music collection in any desired manner. The order in which the tracks are provided may vary and be determined by the user. In one embodiment, all tracks are provided merely in alphabetical order, but if thousands of tracks are available, reaching that desired will be cumbersome. Therefore, e.g. a genre or an artist may be selected first, where after the scrolling after the actual track will be faster. This selection of the artist/genre may be performed using the button 18' or another input means (not illustrated). Yet another manner will be described further below.

It is noted that the signals for the speakers 12, 14 and 16 may be adapted to not have the directions 12', 14' and 16' overlap with the positions of the speakers 12, 14 and 16. For example, providing the signal of a track evenly to the speakers 12 and 14 will have this track sound as if coming from a position directly between the speakers 12 and 14, whereby the direction of this track is from the user to the centre between these speakers.

Then, the directions and the positions of the speakers may be chosen quite freely which is an advantage when the positioning of the speakers in relation to the user is not completely free, such as is the situation in a room or in a car.

Also, the directions 12', 14' and 16' may be determined in relation to the user, such as the users head, which will be described below. Thus, the directions 12', 14' and 16' may be required altered in real time when there is no possibility of altering the speaker positions.

In figure 2, the user 20 has been provided with a tracking device 20', which may be part of a headset, a pair of glasses, or the like, worn by the user.

In one embodiment, the tracker 20' has a gyro or the like for in itself to be able to determine movement and/or directions or the like. In another embodiment, the tracker 20' and the environment comprises one of: a sensor and a part to be sensed by the sensor. In one example, the part to be sensed is a magnet, and the sensor may be a hall sensor. In another example, the part to be sensed is an emitter, such as a Bluetooth® headset, where sensors are provided for sensing the position and/or movement of the headset.

Thus, from the position or angling of this device 20', the direction of the head 20 may be determined, and there from, a track may be determined.

As illustrated in figure 2, a number of directions may be determined, or a direction within one of a plurality of direction (angle) intervals. The first direction directly in front of the user may be determined within an angle interval illustrated by Tx, whereas another direction may be determined within the interval Tx+1. Up to n intervals may be determined to each side of the first direction, from Tx-n to Tx+n.

Thus, if a separate track is provided in each of the intervals Tx+1.. Tx+n, the direction of the head 20 or tracker 20' may be determined and the corresponding track selected to be provided from the first direction. Otherwise, the movement/position/angle information derived from the tracker 20' may be used for, as is described further above, determining how far into a sequence of tracks is scrolled to select the next track to provide. Alternatively, predetermined movements of the tracker 20', either in a plane of the different directions or out of that plane, may be used for providing other instructions, such as a change in track type, to/from radio, CD, stored music, or the like, a change in music genre, a change in artist, or the like.

Alternatively, the direction information may be used by the system 18 for rotating the directions when the head 20 is rotated so as to ensure that the sound provided follows the movement of the head. Thus, if the user looks to the right, the first direction is still provided from in front of the user, etc., and the system 18 adapts the signals provided to the speakers so ensure this.

In figure 3, a breakdown of part of the system 18 is illustrated, where audio/tracks are provided on an input 22 and the direction/tracker data is input on an input 24 of a Digital Signal Processor 26, which determines which track to provide along which direction. This DSP 26 also knows the number of and positions of the individual speakers (see further below), so that it can control which speakers output the information from which track, and to what degree.

In the present set-up, a total of 5 speakers are provided: a centre speaker, two front speakers (right and left) and two back speakers (right and left).

For example, if one of the predetermined directions lies between the centre speaker and the left front speaker, the DSP 26 will determine the intensity of the corresponding signal of the pertaining track to be fed to the left front speaker and the centre speaker. This signal may, for the centre speaker, be combined with the signal to be fed from the first direction.

Having thus generated the signals for the speakers, these signals are fed to amplifier blocks having a pre-amplifier which may be used for controlling the overall sound level in the system and a power amplifier finally feeding the speakers.

Naturally, the track provided along the first predetermined direction may, in fact, be a stereo signal on which the other tracks are overlaid but preferably as mono signals from the other predetermined directions. Thus, the main track may be provided as intended by or from all speakers as would be the situation in a normal stereo.

Naturally, any number of speakers may be used. The more speakers the better a sound is usually provided and the more easily are multiple directions defined, but even two speakers will be sufficient for providing a number of directions in a simple system.

In Figure 4, the system of figure 1 is illustrated in which two additional speakers, an upper speaker 12u and a lower speaker 12l. The user is illustrated with a hatched circle, as the system is seen from directly behind the user 20.

Thus, movement, as described in relation to figure 1 will select one of the tracks provided from the speakers 14 or 16 (from directions 14' or 16') for providing from the direction 12'. Alternatively, in this embodiment, and up/down movement may select a track provided by the speaker 12u or 12l (the corresponding directions) to be provided from the first direction 12'.

Thus, more tracks may be "offered" to the user 20.

Alternatively, movement along the vertical plane may be used for selecting other types of sorting of the tracks or other groups of tracks to be selected from for providing from the second direction.

## Claims

1. A method for a user to select one of multiple audio tracks, the method comprising:
1. simultaneously providing:
- a first of the audio tracks from a first predetermined direction and with a first intensity and
- a second of the audio tracks from a second predetermined direction and with a second intensity, the first predetermined direction being different from the second predetermined direction, and the first intensity exceeding the second intensity,
2. during or subsequent to step 1., the user provides a predetermined input,
3. subsequent to step 2., simultaneously providing:
- the second audio track from the first predetermined direction and with a third intensity exceeding the second intensity and
- a third of the audio tracks from the second predetermined direction and with a fourth intensity, the third intensity exceeding the fourth intensity,
**CHARACTERIZED IN THAT** step 2. comprises the user moving his/her head or an element attached to his/her head from a first angular direction to a second angular direction, where the first angular direction is closer to the second predetermined direction than the second angular direction, and the second angular direction is closer to the first predetermined direction than the first angular direction.

2. A method according to claim 1, wherein the first direction is a direction in front of the user and wherein the second direction is to a side of the user.

3. A method according to claim 1 or 2, wherein:
- step 1. further comprises simultaneously providing a fourth of the audio tracks from a third predetermined direction and with a fifth intensity, the third predetermined direction being different from the second predetermined direction and the first predetermined direction, and the first intensity exceeding the fifth intensity,
- step 3. further comprises simultaneously providing the first audio track from the third predetermined direction and at a sixth intensity, the third intensity exceeding the sixth intensity.

4. A method according to claim 1, wherein the moving step comprises the user moving the element from a first position to a second position, the first position being closer to a position along the second direction than the second position.

5. A system (10) for enabling a user (20) to select one of multiple audio tracks, the system comprising a plurality of speakers (12, 12i, 12u, 14, 16, right, centre, left), an input means (18'), and a controller (18, 26) comprising or being adapted to access the plurality of tracks, the controller being adapted to control the speakers to:
1. simultaneously provide:
- a first of the audio tracks from a first predetermined direction (12') and with a first intensity and
- a second of the audio tracks from a second predetermined direction (14') and with a second intensity, the first predetermined direction being different from the second predetermined direction, and the first intensity exceeding the second intensity,
2. upon an operation of the input means, simultaneously:
- provide the second audio track from the first predetermined direction and with a third intensity exceeding the second intensity and
- provide a third of the audio tracks from the second predetermined direction and with a fourth intensity, the third intensity exceeding the fourth intensity,
**CHARACTERIZED IN THAT** the input means are adapted to determine whether a user's head (20) or an element (20') adapted to be attached to a person's head is moved from a first angular direction to a second angular direction, where the first angular direction is closer to the second predetermined direction than the second angular direction and the second angular direction is closer to the first predetermined direction than the first angular direction.

6. A system according to claim 5, wherein the controller is adapted to control the speakers so that:
- step 1. further comprises simultaneously providing a fourth of the audio tracks from a third predetermined direction (16') and with a fifth intensity, the third predetermined direction being different from the second predetermined direction and the first predetermined direction, and the first intensity exceeding the fifth intensity,
- step 2. further comprises simultaneously providing the first audio track from the third predetermined direction and at a sixth intensity, the third intensity exceeding the sixth intensity.

7. A system according to claim 5, wherein the input means are adapted to determine whether the element is moved from a first position to a second position, the first position being closer to a position along the second predetermined direction than the second position.

## Patentansprüche

1. Verfahren für eine(n) Benutzer(in), um eine von mehreren Tonspuren auszuwählen, wobei das Verfahren Folgendes aufweist:
1. gleichzeitiges Bereitstellen
- einer Ersten der Tonspuren aus einer ersten vorgegebenen Richtung und mit einer ersten Intensität und
- einer Zweiten der Tonspuren aus einer zweiten vorgegebenen Richtung und mit einer zweiten Intensität, wobei die erste vorgegebene Richtung von der zweiten vorgegeben Richtung verschieden ist und wobei die erste Intensität die zweite Intensität überschreitet,
2. stellt während des Schrittes 1. oder auf diesen folgend der/die Benutzer(in) eine vorgegebene Eingabe bereit,
3. auf Schritt 2. folgend gleichzeitiges Bereitstellen
- der zweiten Tonspur aus der ersten vorgegeben Richtung und mit einer dritten Intensität, die die zweite Intensität überschreitet, und
- einer Dritten der Tonspuren aus der zweiten vorgegebenen Richtung und mit einer vierten Intensität, wobei die dritte Intensität die vierte Intensität überschreitet,
**dadurch gekennzeichnet, dass** Schritt 2. umfasst, dass der/die Benutzer(in) seinen/ihren Kopf oder ein an seinem/ihrem Kopf angebrachtes Element aus einer ersten Winkelrichtung in eine zweiten Winkelrichtung bewegt, wobei die erste Winkelrichtung näher zur zweiten vorgegebenen Richtung als die zweite Winkelrichtung liegt und die zweite Winkelrichtung näher zur ersten vorgegebenen Richtung als die erste Winkelrichtung liegt.

2. Verfahren nach Anspruch 1, wobei die erste Richtung eine Richtung vor dem/der Benutzer(in) ist und wobei die zweite Richtung zu einer Seite des Benutzers/der Benutzerin liegt.

3. Verfahren nach Anspruch 1 oder 2 wobei
- Schritt 1. ferner gleichzeitiges Bereitstellen einer Vierten der Tonspuren aus einer dritten vorgegebenen Richtung und mit einer fünften Intensität umfasst, wobei die dritte vorgegebene Richtung von der zweiten vorgegebenen Richtung und der ersten vorgegebenen Richtung verschieden ist und wobei die erste Intensität die fünfte Intensität überschreitet,
- Schritt 3. ferner gleichzeitiges Bereitstellen der ersten Tonspur aus der dritten vorgegebenen Richtung und bei einer sechsten Intensität umfasst, wobei die dritte Intensität die sechste Intensität überschreitet.

4. Verfahren nach Anspruch 1, wobei der Bewegungsschritt umfasst, dass der/die Benutzer(in) das Element aus einer ersten Stellung in eine zweite Stellung bewegt, wobei die erste Stellung näher zu einer Stellung entlang der zweiten Richtung als die zweite Stellung liegt.

5. System (10), um es einem/einer Benutzer(in) (20) zu ermöglichen, eine von mehreren Tonspuren auszuwählen, wobei das System mehrere Lautsprecher (12, 12i, 12u, 14, 16, rechts, mittig, links), ein Eingabemittel (18') und eine Steuerung (18, 26) umfasst, die die mehreren Spuren umfasst oder ausgelegt ist, auf diese zuzugreifen, wobei die Steuerung ausgelegt ist, die Lautsprecher zu steuern, um
1. gleichzeitig Folgendes bereitzustellen:
- eine Erste der Tonspuren aus einer ersten vorgegebenen Richtung (12') und mit einer ersten Intensität und
- eine Zweite der Tonspuren aus einer zweiten vorgegebenen Richtung (14') und mit einer zweiten Intensität, wobei die erste vorgegebene Richtung von der zweiten vorgegeben Richtung verschieden ist und wobei die erste Intensität die zweite Intensität überschreitet,
2. auf eine Betätigung des Eingabemittels hin gleichzeitig
- die zweite Tonspur aus der ersten vorgegeben Richtung und mit einer dritten Intensität bereitzustellen, die die zweite Intensität überschreitet, und
- eine Dritte der Tonspuren aus der zweiten vorgegebenen Richtung und mit einer vierten Intensität bereitzustellen, wobei die dritte Intensität die vierte Intensität überschreitet,
**dadurch gekennzeichnet, dass** das Eingabemittel ausgelegt ist, zu ermitteln, ob der Kopf (20) eines Benutzers/einer Benutzerin oder ein Element (20'), das ausgelegt ist, am Kopf einer Person angebracht zu werden, aus einer ersten Winkelrichtung in eine zweite Winkelrichtung bewegt wird, wobei die erste Winkelrichtung näher zur zweiten vorgegebenen Richtung als die zweite Winkelrichtung liegt und die zweite Winkelrichtung näher zur ersten vorgegebenen Richtung als die erste Winkelrichtung liegt.

6. System nach Anspruch 5, wobei die Steuerung ausgelegt ist, die Lautsprecher so zu steuern, dass
- Schritt 1. ferner gleichzeitiges Bereitstellen einer Vierten der Tonspuren aus einer dritten vorgegebenen Richtung (16') und mit einer fünften Intensität umfasst, wobei die dritte vorgegebene Richtung von der zweiten vorgegebenen Richtung und der ersten vorgegebenen Richtung verschieden ist und wobei die erste Intensität die fünfte Intensität überschreitet,
- Schritt 2. ferner gleichzeitiges Bereitstellen der ersten Tonspur aus der dritten vorgegebenen Richtung und bei einer sechsten Intensität umfasst, wobei die dritte Intensität die sechste Intensität überschreitet.

7. System nach Anspruch 5, wobei das Eingabemittel ausgelegt ist, zu ermitteln, ob das Element aus einer ersten Stellung in eine zweite Stellung bewegt worden ist, wobei die erste Stellung näher zu einer Stellung entlang der zweiten vorgegebenen Richtung als die zweite Stellung liegt.

## Revendications

1. Procédé permettant à un utilisateur de sélectionner l'une de multiples pistes audio, le procédé comprenant :
1. fournir simultanément :
- une première des pistes audio à partir d'une première direction prédéterminée et avec une première intensité, et
- une deuxième des pistes audio à partir d'une deuxième direction prédéterminée et avec une deuxième intensité, la première direction prédéterminée étant différente de la deuxième direction prédéterminée, et la première intensité dépassant la deuxième intensité,
2. au cours de l'étape 1. ou après celle-ci, l'utilisateur fournit une entrée prédéterminée,
3. après l'étape 2., fournir simultanément :
- la deuxième piste audio à partir de la première direction prédéterminée et avec une troisième intensité dépassant la deuxième intensité, et
- une troisième des pistes audio à partir de la deuxième direction prédéterminée et avec une quatrième intensité, la troisième intensité dépassant la quatrième intensité,
**caractérisé en ce que** l'étape 2. comprend l'étape à laquelle l'utilisateur déplace sa tête ou un élément attaché à sa tête à partir d'une première direction angulaire vers une deuxième direction angulaire, la première direction angulaire étant plus proche de la deuxième direction prédéterminée que la deuxième direction angulaire, et la deuxième direction angulaire étant plus proche de la première direction prédéterminée que la première direction angulaire.

2. Procédé selon la revendication 1, dans lequel la première direction est une direction devant l'utilisateur et dans lequel la deuxième direction est vers un côté de l'utilisateur.

3. Procédé selon la revendication 1 ou 2, dans lequel :
- l'étape 1. comprend en outre la fourniture simultanée d'une quatrième des pistes audio à partir d'une troisième direction prédéterminée et avec une cinquième intensité, la troisième direction prédéterminée étant différente de la deuxième direction prédéterminée et de la première direction prédéterminée, et la première intensité dépassant la cinquième intensité,
- l'étape 3. comprend en outre la fourniture simultanée de la première piste audio à partir de la troisième direction prédéterminée et avec une sixième intensité, la troisième intensité dépassant la sixième intensité.

4. Procédé selon la revendication 1, dans lequel l'étape à laquelle l'utilisateur déplace un élément comprend l'étape à laquelle l'utilisateur déplace l'élément d'une première position à une deuxième position, la première position étant plus proche d'une position le long de la deuxième direction que la deuxième position.

5. Système (10) permettant à un utilisateur (20) de sélectionner l'une de multiples pistes audio, le système comprenant une pluralité de haut-parleurs (12, 12i, 12u, 14, 16, droite, centre, gauche), un moyen d'entrée (18'), et un organe de commande (18, 26) comprenant la pluralité de pistes ou étant apte à y accéder, l'organe de commande étant apte à commander aux haut-parleurs de :
1. fournir simultanément :
- une première des pistes audio à partir d'une première direction prédéterminée (12') et avec une première intensité, et
- une deuxième des pistes audio à partir d'une deuxième direction prédéterminée (14') et avec une deuxième intensité, la première direction prédéterminée étant différente de la deuxième direction prédéterminée, et la première intensité dépassant la deuxième intensité,
2. lors d'une opération du moyen d'entrée, simultanément :
- fournir la deuxième piste audio à partir de la première direction prédéterminée et avec une troisième intensité dépassant la deuxième intensité, et
- fournir une troisième des pistes audio à partir de la deuxième direction prédéterminée et avec une quatrième intensité, la troisième intensité dépassant la quatrième intensité,
**caractérisé en ce que** le moyen d'entrée est apte à déterminer si la tête (20) d'un utilisateur ou un élément (20') attaché à sa tête est déplacé à partir d'une première direction angulaire vers une deuxième direction angulaire, la première direction angulaire étant plus proche de la deuxième direction prédéterminée que la deuxième direction angulaire, et la deuxième direction angulaire étant plus proche de la première direction prédéterminée que la première direction angulaire.

6. Système selon la revendication 5, dans lequel l'organe de commande est apte à commander aux haut-parleurs d'effectuer :
- l'étape 1. qui comprend en outre la fourniture simultanée d'une quatrième des pistes audio à partir d'une troisième direction prédéterminée (16') et avec une cinquième intensité, la troisième direction prédéterminée étant différente de la deuxième direction prédéterminée et de la première direction prédéterminée, et la première intensité dépassant la cinquième intensité,
- l'étape 2. qui comprend en outre la fourniture simultanée de la première piste audio à partir de la troisième direction prédéterminée et avec une sixième intensité, la troisième intensité dépassant la sixième intensité.

7. Système selon la revendication 5, dans lequel le moyen d'entrée est apte à déterminer si l'élément est déplacé d'une première position à une deuxième position, la première position étant plus proche d'une position le long de la deuxième direction prédéterminée que la deuxième position.
